# EUROPEAN PATENT SPECIFICATION

(11) **EP 2 202 962 B1**
(45) Date of publication and mention of the grant of the patent: **11.12.2013**
(21) Application number: 09172251.2
(22) Date of filing: 05.10.2009
(51) Int. Cl.: H04N 21/472, H04N 21/485, G11B 27/34, G11B 27/10, H04N 5/445

(54) **Display apparatus and user interface**
Anzeigevorrichtung und Benutzeroberfläche
Appareil d'affichage et interface utilisateur

(30) Priority: 24.12.2008 KR 20080133899
(43) Date of publication of application: 30.06.2010
(73) Proprietor: Samsung Electronics Co., Ltd., Suwon-si, Gyeonggi-do, 443-742 (KR)
(72) Inventor: Park, Sang-shin, Seoul (KR)
(74) Representative: Brandon, Paul Laurence

(56) References cited:
- WO-A2-2007/109162
- GB-A- 2 414 110
- US-A1- 2008 092 168
- US-B1- 6 587 127

## Description

### BACKGROUND OF THE INVENTION

### 1. Field of the Invention

Apparatuses and methods consistent with the present invention relate to display apparatuses that reproduce contents and control methods thereof, and more particularly, to a display apparatus that displays a time point of reproducing contents ("contents reproduction time point") and a control method thereof.

### 2. Description of the Related Art

A display apparatus reproduces and processes images and displays them on a display panel. The display apparatus can be supplied such images in a various manner; that is, transmitted from a broadcasting station or a server, or supplied from an external device, or stored internally in the display apparatus.

For the sequence to reproduce images in a display apparatus, images to be reproduced can be reproduced by grouping a play-list in unit. The plurality of grouped contents as unit images are reproduced in the display apparatus sequentially as predesignated.

However, when the plurality of unit images are reproduced in sequence, a user has difficulty in confirming where the current image being reproduced is in a sequence of the grouped unit images, or where the current reproduction time point is positioned in the reproduction time of the groups.

US 2008/092168 discloses a system for utilizing metadata created either at a central location for shared use by connected users, or at each individual user's location, to enhance user's enjoyment of available broadcast programming content. A variety of mechanisms are employed for automatically and manually identifying and designating programming segments, associating descriptive metadata which the identified segments, distributing the metadata for use at client locations, and using the supplied metadata to selectively record and playback desired programming.

WO 2007/109162 discloses a system and method for displaying a video and an overlay or tag. An application that runs through a browser on a client is used to send a request from the client to a server over a computer network. In response to the request, at least the following is sent from the server to the client: a first uniform resource locator (URL) corresponding to a location on the network where the video is stored, a second URL corresponding to a location on the network where the overlay or tag is stored, and playlist data. The first and second URLs are associated with different servers on the computer network. The first and second URLs and the playlist data are used at the client to retrieve the video and the overlay or tag, and build a playlist. The client merges the video and the overlay into an integrated media sequence that is played to a user via a browser in accordance with the playlist, and displays the tag. The user is automatically linked to content associated with the overlay or tag when the user clicks on a representation of the overlay or tag displayed on the browser.

GB 2 414 110 discloses an all-in-one media player and mixer for a disc jockey has a fixed storage device, such as a hard disc drive, capable for storing media thereon. The media player also has two interfaces having independent selectable settings and corresponding removable media devices attached thereto. Each interface is connected to the fixed storage device and generates its own signal by playing media from the fixed storage device or its corresponding removable media device. The media player also has a mixer that selectively mixes the signal of the interfaces into a mixed signal and communicates it through an output. The mixer can have a cross-fader.

US 6 587 127 discloses a method of operation of a server interacting with users to provide personalized content to each of the users. Personalized content is sent to a first user by communicating first audio or other content associated with a broadcast to a first user location. Second content is selected and a first signal is communicated to the first user location dependent on the user profile. The second content can include second audio content selected in dependence upon the first user profile, in which case playback of the second audio content is synchronized with respect to playback of the first audio content.

### SUMMARY OF THE INVENTION

Accordingly, an aspect of the present invention is to provide a display apparatus, including a display unit; a contents processing unit processing contents so as to be reproduced; a UI processing unit displaying a user interface object on the display unit; and a control unit displaying a block object corresponding to the whole reproduction time of the contents in plural and a marker object indicating a point of the block object, and controlling the UI processing unit to allow a position of the marker object to vary corresponding to the reproduction time of a content being currently reproduced, among the plurality of contents, each content including a moving image having a predetermined reproduction time respectively; wherein the user interface object further includes sector objects sectioning the block object into reproduction sub-blocks by each content; characterised in that: where the reproduction times of the contents in plural are different, the control unit controls the respective reproduction sub-blocks indicated by the sector objects to be identical in length and the variable speed of the marker object to be different by each reproduction sub-block.

The user interface object may further include the number of the contents in plural and reproduction sequence data of the content being reproduced.

The user interface object further comprises the title of the content, the title of the series including the content, reproduction time or reproduction state data of the content selectively.

If the plural contents are selected according to a preset condition, the control unit may control the user interface object to be displayed corresponding to the selected plural contents.

The control unit may control the plural contents to be selected and a selection menu available for designating reproduction sequences of the selected plural contents to be displayed.

If a series contents comprising a plurality of individual contents and reproduction sequence data of the individual contents as predesignated are selected through the selection menu, the control unit may control the user interface object to be displayed corresponding to the plural individual contents and the predesignated production sequences thereof.

Another aspect of the present invention is to provide a control method of a display apparatus, including reproducing a plurality of contents according to the sequence as predesignated, each content including a moving image having a predetermined reproduction time respectively; and displaying a user interface object including a block object corresponding to the reproduction times of the plurality of contents and a marker object indicating a point of the block object according to the reproduction time of a content currently being produced, among the plurality of contents; wherein the user interface object further includes sector objects sectioning the block object into reproduction sub-blocks by each content; characterised in that: the displaying of the user interface object includes, where the reproduction times of the plural contents are different, controlling respective reproduction sub-blocks indicated by the sector objects to be identical in length, and the variable speed of the marker object to be different by each reproduction time.

The user interface object may further include the number of the plural contents and reproduction sequence data of the content being reproduced.

The user interface object may further include the title of the content, the title of the series including the content, reproduction time or reproduction state data of the content selectively.

The reproducing of the plural contents according to the sequences predesignated may include selecting the plural contents according to a preset condition.

The selecting of the plural contents may include displaying a selection menu through which the plural contents can be selected, and the reproduction sequences of the selected plural contents can be designated.

The selecting of the plural contents may include selecting a series contents including a plurality of individual contents through the selection menu, and the reproduction sequence data of each individual content as predesignated, and the displaying of the user interface object comprises displaying the user interface object corresponding to the plurality of individual contents and the reproduction sequences thereof as predesignated.

According to still another aspect of the present invention, there is provided a control method of a display apparatus, comprising processing a plurality of contents in sequence as predesignated; and displaying a block object corresponding to the reproduction times of the plurality of contents, a marker object indicating a point of the block object corresponding to a processing point in time of the content currently being processed, among the plurality of contents, and a user interface object including data with respect to the point indicated by the marker object.

### BRIEF DESCRIPTION OF THE DRAWINGS

The above embodiments and/or utilities of the present invention will become apparent and more readily appreciated from the following description of the exemplary embodiments, taken in conjunction with the accompanying drawings of which:

FIG. 1 is a block diagram illustrating a configuration of a display apparatus according to an exemplary embodiment of the present invention;

FIG. 2 illustrates an example of a contents selection menu in the display apparatus of FIG. 1;

FIG. 3 illustrates another example of a contents selection menu different from the example of FIG. 2;

FIG. 4 illustrates user interface objects displayed in the display apparatus of FIG. 1;

FIG. 5 is an enlarged diagram of the user interface objects of FIG. 4;

FIG. 6 illustrates the user interface objects at a time point after contents reproduction for a predetermined period of time has been progressed from the state of FIG. 5;

FIG. 7 is a control flow chart illustrating a control method of a display apparatus according to an exemplary embodiment of the present invention.

### DETAILED DESCRIPTION OF THE EXEMPLARY EMBODIMENTS

Reference will now be made in detail to the exemplary embodiments according to the present invention, examples of which are illustrated in the accompanying drawings, wherein like reference numerals refer to the like elements throughout. The exemplary embodiments are described below in sequence to explain the present invention by referring to the figures.

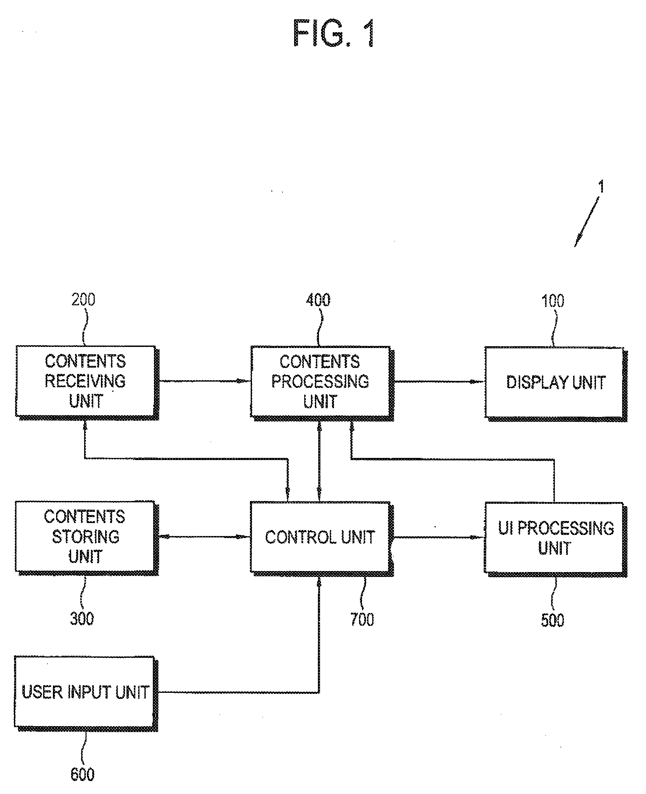

FIG. 1 is a block diagram illustrating a configuration of a display apparatus 1 according to an exemplary embodiment of the present invention. The display apparatus 1 according to this exemplary embodiment may be implemented by any device available for displaying images. That is, an inventive concept of the present invention can be applied to any device, without regard to what it is used for. By way of example, the display apparatus 1 may be implemented in a various manner, e.g., by a television (TV), a monitor, a personal video recorder (PVR), a portable media player (PMP), an electronic picture frame, a video wall and so on.

As illustrated in FIG. 1, the display apparatus 1 reproduces a content or a play-list. There is no limitation in forms to implement the contents. For example, the contents may be moving images, still images, texts, audio, etc., alone or in combination.

The display apparatus 1 further comprises a display unit 100, a contents processing unit 400 to process contents so as to reproduce them, a user interface (UI) processing unit 500 to display user interface objects on the display unit 100, and a control unit 700 to control operations of the contents processing unit 400 and the UI processing unit 500.

According to this exemplary embodiment, the user interface objects are displayed on the display unit 100 according to preset inputs while a plurality of selected contents are reproduced in a predesignated sequence. A user interface object includes a block object corresponding to the reproduction times of the plural contents and a marker object to indicate a point of the block object. The control unit 700 controls the UI processing unit 500 to change a position of the marker object, corresponding to the reproduction time point of a content being reproduced.

This enables the user to easily know the current content being reproduced, among the plurality of selected contents, and to which time point of the position the reproduction point time of the concerned content corresponds.

The display apparatus 1 further includes a contents receiving unit 200 receiving contents externally, a contents storing unit 300 storing the contents therein, and a user input unit 600 manipulated by a user to transmit preset input commands to the control unit 700.

The display apparatus 1 of this exemplary embodiment will be described in detail.

Where a content processed by the contents processing unit 400 includes an image, the display unit displays the image of the concerned content thereon. In order to display the image, the display apparatus 1 may be implemented in a diverse manner. For example, the display apparatus 1 may include a cathode ray tube (CRT) that displays analog images, a liquid crystal display (LCD) that displays digital images, a plasma display, a light-emitting diode (LED) display, an organic light-emitting diode display, a surface-conduction electron emitter display, a carbon nano-tube display, a nano-crystal display.

The contents receiving unit 200 receives contents externally supplied to the display apparatus 1. The contents receiving unit 200 to receive the contents may have diverse configurations. For example, the contents receiving unit 200 may be configured to receive broadcasting streams transmitted from broadcasting stations by wire or wirelessly, or receive contents supplied from a set-top box (not illustrated) or locally from a digital versatile disc (DVD)/Blu-ray disc player. For reception, the contents receiving unit 200 may have the following specifications: composite video, component video, super video, Radio and Television Receiver Manufacturers' Association (SCART) or high definition multimedia interface.

The contents receiving unit 200 may also be connected to a server (not illustrated) through a network, to thereby download contents from the server (not illustrated). Or the contents receiving unit 200 may also have a connector for connection to an external memory (not illustrated) according to such specifications as wire/wireless universal serial bus (USB) or Bluetooth, to thereby receive contents stored in the external memory (not illustrated).

The contents storing unit 300 stores contents received by the content receiving unit 200, and supplies the stored contents to the contents processing unit 400 according to a selection by the control unit 700. The contents storing unit 300 may be implemented by nonvolatile memories such as a flash memory, a hard disc drive (HDD), a solid state drive, to maintain the stored contents even in case of power-failure.

Forms to store contents in the contents storing unit 300 are not limited. The contents may be stored in a various manner. For example, contents from a channel of tuned broadcasting streams may be recorded, contents downloaded from the server (not illustrated) may be stored, or contents read from an external memory (not illustrated) may be stored.

If contents are transmitted from the contents receiving unit 200 or the contents storing unit 300, the contents processing unit 400 processes and reproduces the contents. Reproduction methods of the contents by the contents processing unit 400 are adapted according to properties of the contents. In detail, where an image is contained in a content, the contents processing unit 400 processes the content so as to allow the image contained in the content to be displayed on the display unit 100. Where an audio is contained in the content, the contents processing unit 400 processes the content so as to allow the audio contained in the content to be output through a speaker (not illustrated). The contents processing unit 400 may have separate configurations to process the image and the audio.

Configurations of the contents processing unit 400 to process an image corresponding to the content can be designated variously. For example, the contents processing unit 400 may include image processing blocs (not illustrated) such as a decoder, a scaler, an image quality enhancer, an image scanner, etc., whereby the contents processing unit decodes the content into a predetermined format and adjusts it adaptively to a resolution and a size on which the content is available for being displayed on the display unit 100. If necessary, the contents processing unit corrects the image quality and scans it onto the display unit 100, to display the image thereon.

The contents processing unit 400 may be implemented by grouped bodies of individual elements that can perform such specific features independently, or an integral one-chip integrating the features.

If a user interface object is transmitted from the UI processing unit 500, the contents processing unit 400 processes the user interface object to be displayed on the display unit 100. Where the current display unit 100 is currently displaying a content thereon, it can display the user interface object together with the content as an on screen display or a pop-up, etc.

The UI processing unit 500 generates a user interface object that can be displayed on the display unit and transmits it to the contents processing unit 400, according to a control by the control unit 700. The user interface object refers to a visual object including characters, symbols, images, etc, that are handled in the display apparatus 1, implemented from predetermined data. Information contained in the user interface object is not limited in content, and also in form, shape or size thereof.

With respect to the present exemplary embodiment, a configuration of the UI processing unit 500 is described separately from the contents processing unit, but which does not limit an inventive concept of the present invention. For example, the UI processing unit 500 may be integrated into the contents processing unit 400.

The user input unit 600 receives a preset input from the user and transmits a command corresponding to the input to the control unit 700, whereby the control unit 700 can perform a control operation corresponding to the transmitted command. The user input unit 600 may be implemented by a menu key installed on an outside of the display apparatus 1, a remote controller or an external device (not illustrated) communicating with the display apparatus 1. Besides, the user input unit may also be implemented diversely; for example, if the display unit 100 is implemented by a touch screen, it is possible for the user to touch a menu displayed on the display unit 100.

If a content among the contents stored in the contents storing unit 300 is selected, the control unit 700 controls the contents processing unit 400 to process and reproduce the concerned content. In this case, if a play-list are selected, the control unit 700 controls the plurality of selected contents to be reproduced in a predesignated sequence.

There is no limitation to a method of selecting contents and designating the sequences of reproducing the selected contents. For example, the user may be allowed to select contents through the user input unit 600. In this case, the control unit 700 controls the UI processing unit 500 and the contents processing unit 400 to display a selection menu associated with the contents, stored in the contents storing unit 300. Then, the user can perform selection of the contents and designation of the reproduction sequences thereof, through the contents selection menu displayed on the display unit 100.

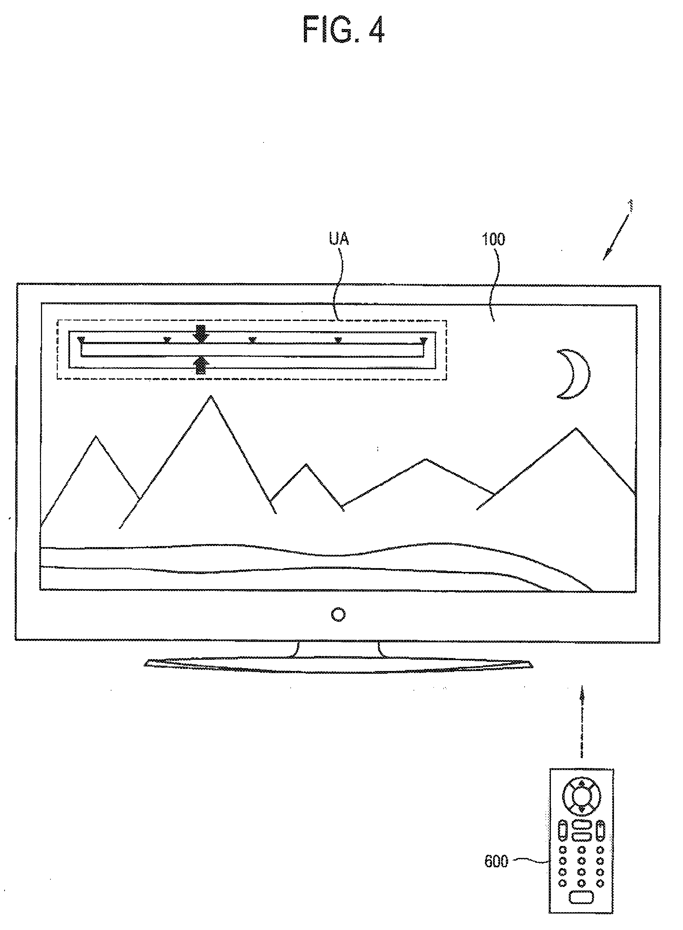

If a preset input is received at the user input unit 600 while the plurality of selected contents are being reproduced in a predesignated sequence, the control unit 700 controls the UI processing unit 500 to display a user interface object indicating a reproduction time point of the current content being reproduced. A configuration of the user interface object according to this exemplary embodiment will be described in detail with reference to FIGS. 4 to 7.

With respect to the displayed user interface object, the control unit 700 may control to continuously display it if there is no separate input from the user input unit 600, or not to display it after a preset period of time has elapsed or when a special input is received at the user input unit 600.

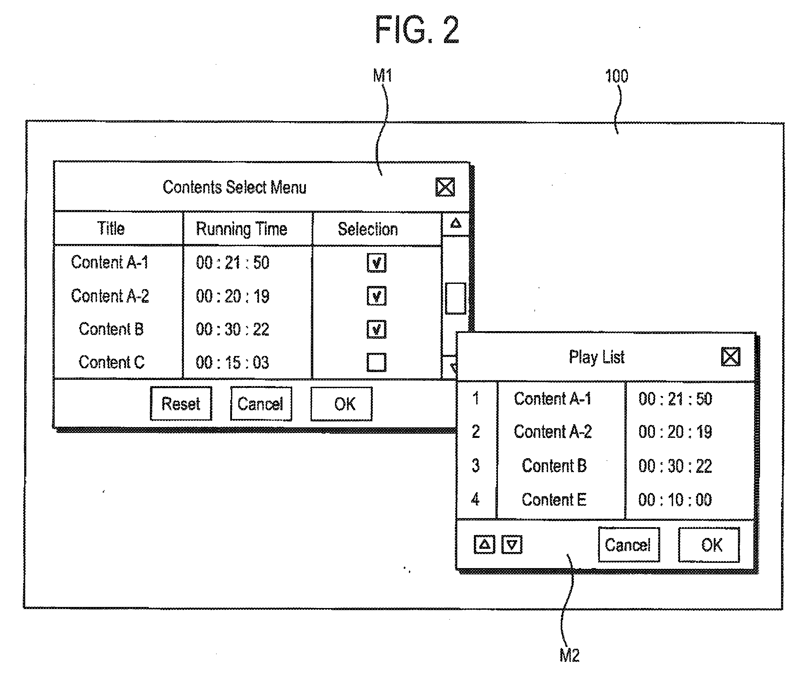

A method of selecting a play-list in the display apparatus 1 according to the present exemplary embodiment will be described with reference to FIG. 2.

FIG. 2 illustrates an example of a contents selection menu displayed on the display unit 100.

As illustrated in FIG. 2, if a user inputs to select contents through the user input unit 600, the control unit 700 controls the contents selection menu M1, indicating data associated with the contents prestored in the contents storing unit 300, to be displayed on the display unit 100.

The contents selection menu M1 includes data associated with each content, including reproduction times of the contents. In an exemplary embodiment, the reproduction times indicate the running time of the contents. Besides, a variety of relevant data may be included therein. The data may be present as metadata in a header of each content, or may be read from electronic program guide (EPG) information received through the contents receiving unit 200.

In the present exemplary embodiment, the contents selection menu M1 indicates a title and a reproduction time of each content, but this is merely for the sake of description, and it does not limit an inventive concept of the present invention.

Each content indicated in the contents selection menu M1 has a check box to select it. By checking the check box of a desired content, the user can select the content. If a selection of plural contents is finished, the control unit 700 controls to display a play list M2 indicating data associated with the selected contents.

According to the present exemplary embodiment, the play list M2 is configured with a pop-up window separate from the contents selection menu M1, but it is not limited thereto. For example, the playlist M2 and the contents selection menu M1 may be incorporated into a single window.

The play list M2 includes data associated with the plural contents selected in the contents selection menu M1 and data associated with the reproduction sequences of the selected contents. The reproduction sequences of the contents may be adjustable through the user input unit 600.

It is also possible to delete any undesired content or add any desired content to be reproduced in the play list M2.

Upon completion of this process, the control unit 700 reproduces the plural selected contents in the predesignated reproduction sequence.

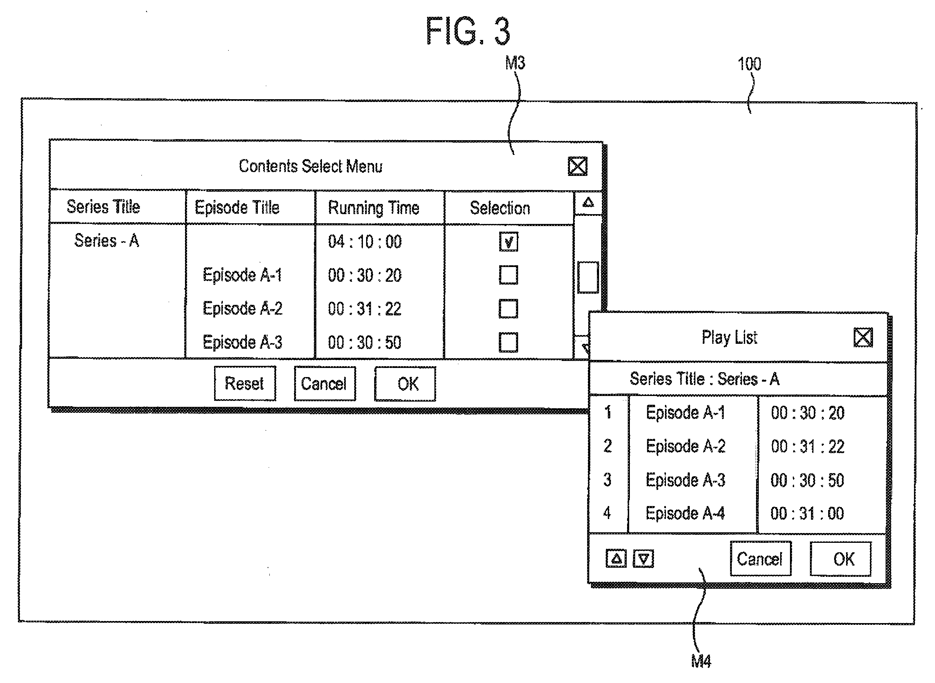

A configuration to select contents is not limited to the exemplary embodiment described above. Another method to select contents, different from the case of FIG. 2, will be described with reference to FIG. 3.

As illustrated in FIG. 3, each of the contents may be independent or has a mutual connection with another content. As an example having the mutual connection, there are "series contents" including a plurality of episode contents.

By way of example, the series contents may refer to dramas, documentary, animation, etc., which are periodically broadcast. The reproduction sequence of each episode content is determined in the context of the contents.

The contents selection menu M3 indicates data associated with the series contents. FIG. 3 illustrates that the contents selection menu M3 includes a plurality of episode contents entitled "Episode A-1," "Episode A-2," etc. under the series contents having the title of "Series-A."

As in the case of FIG. 2, each episode content can be individually selected in the contents selection menu M3. If the series contents are selected as illustrated in FIG. 3, a play-list included in the concerned series contents are selected.

The play list M4 indicates a plurality of episode contents included in "Series-A" and the reproduction sequence thereof when the series contents of "Series-A" is selected in the contents selection menu M3.

Referring to the play list M4, "Series-A" consists of four episodes such as "Episode A-1, Episode A-3, Episode A-3 and Episode A-4," and each episode has is designated reproduction sequence. The reproduction sequence of each episode content is specified in association with the context of each episode, which can be predesignated, without separate designation through the user input unit 600.

As described above with reference to FIGS. 2 and 3, if a play-list are selected and the reproduction sequences thereof are predesignated, the control unit 700 controls to display a user interface object (UA) as illustrated in FIG. 4.

FIG. 4 illustrates that the user interface object (UA) according to the present exemplary embodiment is displayed in the display apparatus 1.

As illustrated in FIG. 4, if an input preset through the user input unit 600 is performed while a content is being reproduced in the display unit 100, the user interface object (UA) corresponding thereto is displayed. The user interface object (UA) may be displayed in a corner of the content or semi-transparently, to minimize an interference to the content being currently reproduced in the display unit 100.

The user interface object (UA) includes a relative position at the current reproduction time point relative to the total reproduction time of the plurality of selected contents and data associated with the reproduction sequence of the currently reproduced content relative to the total number of the selected contents. Besides, it may further include diverse data associated with the content reproduction.

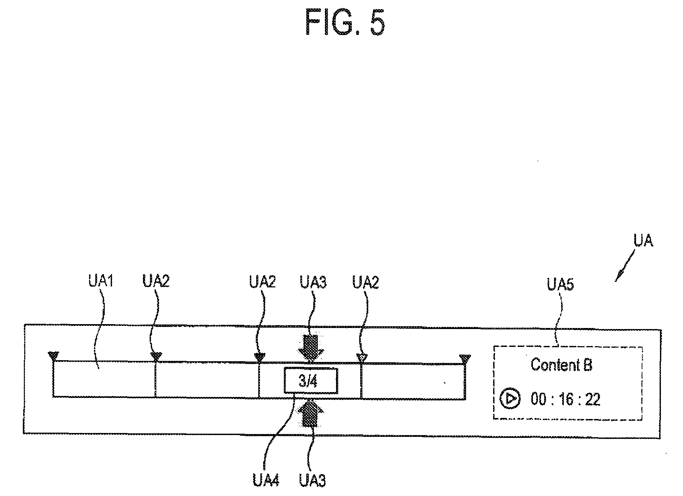

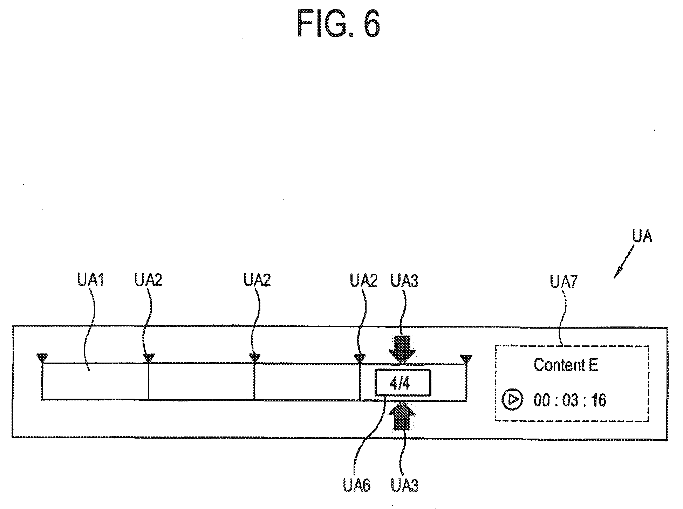

The user interface object (UA) will be descried in detail with reference to FIGS. 5 and 6.

FIG. 5 is an enlarged diagram of the user interface object (UA) of FIG. 4. The user interface object (UA) of FIG. 5 illustrates four contents, but which is merely for the sake of explaining the present exemplary embodiment, and it does not limit an inventive concept of the present invention.

As illustrated in FIG. 5, the user interface object (UA) includes a block object UA1 corresponding to the total reproduction time of the plurality of selected contents, sector objects UA2 to indicate reproduction sub-blocks of respective contents in the block object UA1, and a marker object UA3 to indicate a point in the total reproduction time by indicating a point on the block object UA1.

In the present exemplary embodiment, a block object UA1 is shaped as a bar and the marker object UA3 is shaped with an arrow, but they do not limit an inventive concept of the present invention. The block object UA1 indicates the time as a block having a predetermined length, and the marker object UA3 indicates a time point in the block; but, the block object UA1 and the marker object UA3 may be implemented with various shapes and sizes within the extent to express the concept of the present invention.

The user interface object UA may further include sequence data object UA4 indicating the number of the plural contents and the reproduction sequence of the current content being reproduced, and additional data object UA5 indicating the title of content, current reproduction time and current reproduction state, etc.

The sequence data object UA4 is linked with movement of the marker object UA3, but an inventive concept of the present invention is not limited thereto. For example, the sequence data object UA4 may be indicated together with the additional data object UA5.

Where four contents are selected, the sector object UA2 sections the block object UA1 into four sub-blocks. Each sub-block sectioned in this way corresponds to each content according to its predesignated reproduction sequence. That is, the entire block of the block object UA1 correspond to the total reproduction time of the four contents and the four sub-blocks sectioned by the sector object A2 each correspond with the reproduction time of each content.

The marker object UA3 indicates a reproduction time point of the content currently being reproduced. A position of the marker object UA3 varies as the reproduction of the content progresses, thereby indicating the reproduction time point of the content in real time.

With the configuration described above, the marker object UA3 of Fig. 5 is positioned in the third sub-block of the block objects UA1 sectioned into four sub-blocks by the sector object UA2, and thus, it can be known that the third content is now in the state of being reproduced, among the total four contents. In addition, the marker object UA3 indicates a position in the third block, corresponding to a time point being currently reproduced, in the reproduction time of the third content.

As described above, the content displayed in the user interface object UA varies if there is a difference in the reproduction time point of a content, which will be described with reference to FIG. 6.

FIG.6 illustrates a user interface object UA at the time point when reproduction of the content has been progressed for a predetermined time from the state of FIG. 5.

As illustrated in FIG. 6, the marker object UA3 is positioned in the fourth sub-block of the block object UA1 sectioned into four sub-blocks by the sector object A2. Partial data of the sequence data object UA6 and the additional data object UA7 changes in correspondence to the content currently being reproduced.

It can be known from FIG. 6 that the fourth content is being reproduced among the total four contents.

The user interface object UA may be represented so that the user can directly recognize a reproduction time point of the content being currently reproduced, relative to the total reproduction time of the plural selected contents. In addition, a change in reproduction time point can be indicated in real time by varying a position of the marker object UA3 according to the reproduction progress of the content.

Where the plural selected contents have different reproduction times, the block object UA1 is sectioned by the sector object UA2.

Each reproduction sub-block sectioned by the sector object UA2 is identical in length and the variable speed of the marker object UA3 can be differently controlled according to the reproduction time of the content corresponding to each reproduction sub-block.

For example, if the reproduction time of the content corresponding to the third block is longer than that of the content corresponding to the fourth block, the variable speed of the marker object UA3 is slower in the third block than in the fourth block.

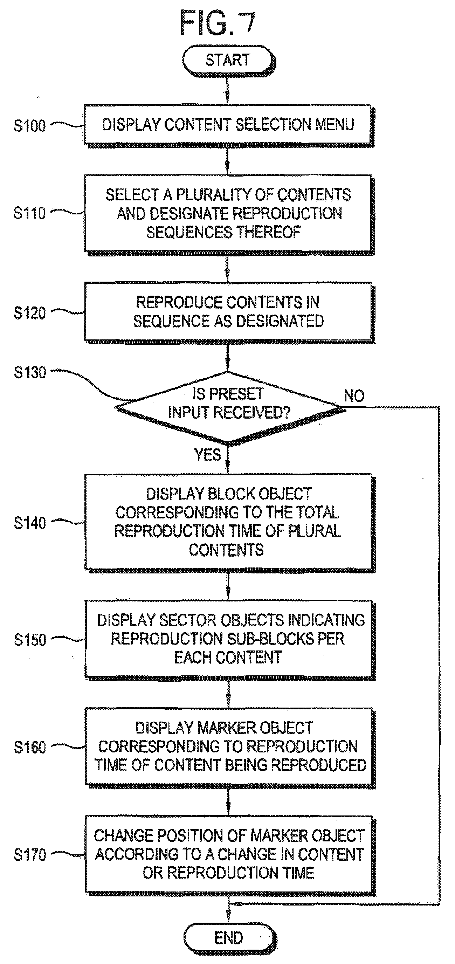

A control process of the display apparatus 1 according to this exemplary embodiment will be described with reference to FIG. 7. FIG. 7 is a control flowchart illustrating the control process.

As illustrated in FIG. 7, if a command with respect to selection of a content is received through the user input unit 600, the control unit 700 displays a selection menu associated with the content (S100). The user selects a play-list through the selection menu, and designates the reproduction sequences of the play-list (S110). The control unit 700 makes the play-list reproduced according to the predesignated reproduction sequences (S120).

While a content is being reproduced, the control unit 700 determines whether a preset input preset is received through the user input unit 600 (S130). If it is determined that the preset input is received, the control unit 700 controls the user interface object to be displayed as follows.

The control unit 700 controls to display a block object corresponding to the total reproduction time of the plural contents (S140) and to display sector objects sectioning a reproduction time by each content in the block object (S150). The control unit 700 controls to display a marker object to indicate a position corresponding to a reproduction time point of the current content being reproduced (S160).

If the user interface object is displayed, the control unit 700 controls to change the position of the marker object responsively to a change in the content or in the reproduction time point thereof (S170).

Although a few exemplary embodiments of the present invention have been illustrated and described in details, the present invention shall be limited thereto, and can be carried out in a various manner, within the scope of the claims as claimed in the specification. Further, it will be appreciated by those skilled in the art that changes may be made in these exemplary embodiments without departing from the invention, the scope of which is defined in the appended claims.

## Claims

1. A display apparatus, comprising:
a display unit (100);
a contents processing unit (400) processing plurality of contents to be reproduced, each content including a moving image having a predetermined reproduction time respectively;
a user interface (UI) processing unit (500) displaying a user interface object on the display unit (100); and
a control unit (700) displaying a block object (UA) corresponding to the total reproduction time of the plurality of contents and a marker object indicating a point of the block object (UA), and controlling the UI processing unit (500) to change a position of the marker object according to a reproduction time of a content being currently reproduced, among the plurality of contents; wherein the user interface object further comprises sector objects sectioning the block object into reproduction sub-blocks by each of the plurality of contents;
**characterised in that**: where the reproduction times of the plurality of contents are different, the control unit (700) controls the respective reproduction sub-blocks indicated by the sector objects to be identical in length and variable speed of the marker object to be different by each reproduction sub-block.

2. The display apparatus of claim 1, wherein the user interface object further comprises the number of the plurality of contents and reproduction sequence data of the content being currently reproduced.

3. The display apparatus of claim 1, wherein if the plurality of contents are selected according to a preset condition, the control unit (700) controls the user interface object to be displayed corresponding to the selected plurality of contents.

4. The display apparatus of claim 3, wherein the control unit (700) controls the plurality of contents to be selected and a selection menu available for designating reproduction sequences of the selected plurality of contents to be displayed.

5. The display apparatus of claim 4, wherein if a series contents comprising a plurality of individual contents and predesignated reproduction sequence data of the plurality of individual contents are selected through the selection menu, the control unit (700) controls the user interface object to be displayed corresponding to the plurality of individual contents and the predesignated production sequence data.

6. A control method of a display apparatus, comprising:
reproducing a plurality of contents according to a predesignated sequence, each content including a moving image having a predetermined reproduction time respectively; and
displaying a user interface object (UA) including a block object (UA) corresponding to a total reproduction time of the plurality of contents and a marker object indicating a point of the block object according to a reproduction time of a content currently being produced, among the plurality of contents;
wherein the user interface object further comprises sector objects sectioning the block object into reproduction sub-blocks by each of the plurality of contents;
**characterised in that**: the displaying of the user interface object comprises, where the reproduction times of the plurality of contents are different, controlling respective reproduction sub-blocks indicated by the sector objects to be identical in length, and variable speed of the marker object to be different by each reproduction sub-block.

7. The method of claim 6, wherein the reproducing of the plurality of contents according to the predesignated sequences comprises selecting the plurality of contents according to a preset condition.

8. The method of claim 7, wherein the selecting of the plurality of contents comprises displaying a selection menu through which the plurality of contents can be selected, and the reproduction sequences of the selected plurality of contents can be designated.

9. The method of claim 8, wherein the selecting of the plurality of contents comprises selecting a series contents including a plurality of individual contents through the selection menu, and the predesignated reproduction sequence data of each individual content,
the displaying of the user interface object comprises displaying the user interface object corresponding to the plurality of individual contents and the predesignated reproduction sequences thereof.

## Patentansprüche

1. Anzeigevorrichtung, aufweisend:
eine Anzeigeeinheit (100);
eine Inhalteverarbeitungseinheit (400), die mehrere Inhalte verarbeitet, die wiedergegeben werden sollen, wobei jeder Inhalt jeweils ein Bewegtbild mit einer vorbestimmten Wiedergabezeit aufweist;
eine Benutzeroberflächen(UI)-Verarbeitungseinheit (500), die ein Benutzeroberflächenobjekt auf der Anzeigeeinheit (100) anzeigt; und
eine Steuereinheit (700), die ein Blockobjekt (UA), das der Gesamtwiedergabezeit der mehreren Inhalte entspricht, und ein Marker-Objekt anzeigt, das einen Punkt des Blockobjekts (UA) anzeigt, und die UI-Verarbeitungseinheit (500) so steuert, dass sie eine Position des Marker-Objekts gemäß einer Wiedergabezeit eines gegenwärtig wiedergegebenen Inhalts unter den mehreren Inhalten ändert; wobei das Benutzeroberflächenobjekt ferner Sektor-Objekte aufweist, die das Blockobjekt in Wiedergabe-Teilblöcke durch jeden der mehreren Inhalte aufteilen;
**dadurch gekennzeichnet, dass**, wenn die Wiedergabezeiten der mehreren Inhalte verschieden sind, die Steuereinheit (700) die jeweiligen, durch die Sektor-Objekte angezeigten Wiedergabe-Teilblöcke so steuert, dass sie in der Länge identisch sind, und die veränderliche Geschwindigkeit des Marker-Objekts so steuert, dass sie durch jeden Wiedergabe-Teilblock verschieden ist.

2. Anzeigevorrichtung nach Anspruch 1, wobei das Benutzeroberflächenobjekt ferner die Anzahl der mehreren Inhalte und Wiedergabefolgedaten des gegenwärtig wiedergegebenen Inhalts aufweist.

3. Anzeigevorrichtung nach Anspruch 1, wobei, wenn die mehreren Inhalte gemäß einer voreingestellten Bedingung ausgewählt werden, die Steuereinheit (700) das Benutzeroberflächenobjekt so steuert, dass es gemäß den ausgewählten mehreren Inhalten angezeigt wird.

4. Anzeigevorrichtung nach Anspruch 3, wobei die Steuereinheit (700) die mehreren Inhalte, die ausgewählt werden sollen, und ein Auswahlmenü steuert, das zum Bestimmen von Wiedergabefolgen der ausgewählten mehreren Inhalte verfügbar ist, die angezeigt werden sollen.

5. Anzeigevorrichtung nach Anspruch 4, wobei, wenn eine Reihe Inhalte, die mehrere einzelne Inhalte aufweist, und im Voraus festgelegte Wiedergabefolgedaten der mehreren einzelnen Inhalte durch das Auswahlmenü ausgewählt werden, die Steuereinheit (700) d a s Benutzeroberflächenobjekt so steuert, dass es entsprechend den mehreren einzelnen Inhalten und den im Voraus festgelegten Wiedergabefolgedaten angezeigt wird.

6. Steuerverfahren einer Anzeigevorrichtung, aufweisend:
Wiedergeben von mehreren Inhalten gemäß einer im Voraus festgelegten Folge, wobei jeder Inhalt jeweils ein Bewegtbild mit einer vorbestimmten Wiedergabezeit aufweist; und
Anzeigen eines Benutzeroberflächenobjekts (UA), das ein Blockobjekt (UA), das einer Gesamtwiedergabezeit der mehreren Inhalte entspricht, und ein Marker-Objekt aufweist, das einen Punkt des Blockobjekts anzeigt, gemäß einer Wiedergabezeit eines gegenwärtig wiedergegebenen Inhalts unter den mehreren Inhalten;
wobei das Benutzeroberflächenobjekt ferner Sektor-Objekte aufweist, die das Blockobjekt in Wiedergabe-Teilblöcke durch jeden der mehreren Inhalte aufteilen;
**dadurch gekennzeichnet, dass** das Anzeigen des Benutzeroberflächenobjekts, wenn die Wiedergabezeiten der mehreren Inhalte verschieden sind, ein derartiges Steuern der jeweiligen, durch die Sektor-Objekte angezeigten Wiedergabe-Teilblöcke, dass sie in der Länge identisch sind, und der veränderlichen Geschwindigkeit des Marker-Objekts, dass sie durch jeden Wiedergabe-Teilblock verschieden ist, aufweist.

7. Verfahren nach Anspruch 6, wobei das Wiedergeben der mehreren Inhalte gemäß den im Voraus festgelegten Folgen ein Auswählen der mehreren Inhalte gemäß einer voreingestellten Bedingung aufweist.

8. Verfahren nach Anspruch 7, wobei das Auswählen der mehreren Inhalte ein Anzeigen eines Auswahlmenüs aufweist, durch welches die mehreren Inhalte ausgewählt werden können und die Wiedergabefolgen der ausgewählten mehreren Inhalte festgelegt werden können.

9. Verfahren nach Anspruch 8, wobei das Auswählen der mehreren Inhalte ein Auswählen einer Reihe Inhalte, die mehrere einzelne Inhalte aufweist, durch das Auswahlmenü und der im Voraus festgelegten Wiedergabefolgedaten jedes einzelnen Inhalts aufweist,
das Anzeigen des Benutzeroberflächenobjekts ein Anzeigen des Benutzeroberflächenobjekts entsprechend den mehreren einzelnen Inhalten und den im Voraus festgelegten Wiedergabefolgen davon aufweist.

## Revendications

1. Appareil d'affichage comprenant :
- une unité d'affichage (100) ;
- une unité de traitement de contenu (400) traitant plusieurs contenus à reproduire, chaque contenu comprenant une image mobile ayant respectivement un temps de reproduction prédéterminé ;
- une unité de traitement d'interface utilisateur (UI) (500) affichant un objet d'interface utilisateur sur l'unité d'affichage (100) ; et
- une unité de commande (700) affichant un objet bloc (UA) correspondant au temps de reproduction total desdits plusieurs contenus et un objet marqueur indiquant un point de l'objet bloc (UA), et commandant l'unité de traitement d'UI (500) afin de changer une position de l'objet marqueur en fonction d'un temps de reproduction d'un contenu actuellement reproduit parmi lesdits plusieurs contenus ; l'objet d' interface utilisateur comprenant en outre des objets secteurs divisant l'objet bloc en sous-blocs de reproduction pour chacun desdits plusieurs contenus ;
- **caractérisé en ce que**, lorsque les temps de reproduction desdits plusieurs contenus sont différents, l'unité de commande (700) commande les sous-blocs de reproduction respectifs indiqués par les objets secteurs de sorte qu'ils soient de longueur identique, ainsi que la vitesse variable de l'objet marqueur de sorte qu'elle soit différente pour chaque sous-bloc de reproduction.

2. Appareil d'affichage selon la revendication 1, dans lequel l'objet d'interface utilisateur comprend en outre le nombre desdits plusieurs contenus ainsi que des données de séquence de reproduction du contenu actuellement reproduit.

3. Appareil d'affichage selon la revendication 1, dans lequel si lesdits plusieurs contenus sont choisis en fonction d'une condition prédéterminée, l'unité de commande (700) commande l'objet d'interface utilisateur de sorte qu'il soit affiché de manière correspondante auxdits plusieurs contenus choisis.

4. Appareil d'affichage selon la revendication 3, dans lequel l'unité de commande (700) commande l'affichage desdits plusieurs contenus à choisir et d'un menu de sélection disponible pour désigner les séquences de reproduction desdits plusieurs contenus choisis.

5. Appareil d'affichage selon la revendication 4, dans lequel si un contenu série comprenant plusieurs contenu individuels et des données de séquences de reproduction pré-désignées desdits plusieurs contenus individuels sont choisis par le biais du menu de sélection, l'unité de commande (700) commande l'affichage de l'objet d'interface utilisateur de manière correspondante auxdits plusieurs contenus individuels et aux données de séquences de production pré-désignées.

6. Procédé de commande d'un appareil d'affichage, consistant à :
- reproduire plusieurs contenus en fonction d'une séquence pré-désignée, chaque contenu comprenant une image mobile possédant respectivement un temps de reproduction prédéterminé ; et
- afficher un objet d'interface utilisateur (UA) comprenant un objet bloc (UA) correspondant à un temps de reproduction total desdits plusieurs contenus et un objet marqueur indiquant un point de l'objet bloc en fonction d'un temps de reproduction d'un contenu actuellement produit parmi lesdits plusieurs contenus ;
- l'objet d'interface utilisateur comprenant en outre des objets secteurs divisant l'objet bloc en sous-blocs de reproduction pour chacun desdits plusieurs contenus ;
- **caractérisé en ce que** l'affichage de l'objet d'interface utilisateur consiste, lorsque les temps de reproduction desdits plusieurs contenus sont différents, à commander les sous-blocs de reproduction respectifs indiqués par les objets secteurs de sorte qu'ils soient de longueur identique, ainsi que la vitesse variable de l'objet marqueur de sorte qu'elle soit différente pour chaque sous-bloc de reproduction.

7. Procédé selon la revendication 6, dans lequel la reproduction desdits plusieurs contenus en fonction de séquences pré-désignées consiste à choisir lesdits plusieurs contenus en fonction d'une condition prédéterminée.

8. Procédé selon la revendication 7, dans lequel la sélection desdits plusieurs contenus consiste à afficher un menu de sélection par le biais duquel lesdits plusieurs contenus peuvent être choisis, et les séquences de reproduction desdits plusieurs contenus choisis peuvent être désignées.

9. Procédé selon la revendication 8, dans lequel la sélection desdits plusieurs contenus consiste à choisir un contenu série comprenant plusieurs contenus individuels par le biais du menu de sélection, et les données de séquences de reproduction pré-désignées de chaque contenu individuel ; et
- l'affichage de l'objet d'interface utilisateur consiste à afficher l'objet d'interface utilisateur correspondant auxdits plusieurs contenus individuels et à leurs séquences de reproduction pré-désignées.
